# EUROPÄISCHE PATENTANMELDUNG

(11) **EP 1 830 244 A2**
(43) Veröffentlichungstag der Anmeldung: **05.09.2007**
(21) Anmeldenummer: 07002586.1
(22) Anmeldetag: 07.02.2007
(51) Int. Cl.: G06F 3/01

(54) **Verfahren und Vorrichtung zum Betreiben von zumindest zwei Funktionskomponenten eines Systems, insbesondere eines Fahrzeugs**

(30) Priorität: 01.03.2006 DE 102006009291
(71) Anmelder: AUDI AG, 85045 Ingolstadt (DE)
(72) Erfinder: Riedel, Helmut, Dr., 86697 Oberhausen (DE); Barke, Alexander, 85049 Ingolstadt (DE)
(74) Vertreter: Thielmann, Frank

(57) **Zusammenfassung**

Die Erfindung betrifft ein Verfahren und eine Vorrichtung zum Betreiben von zumindest zwei Funktionskomponenten (16d, 16e) eines Systems (1), bei dem eine der Funktionskomponenten (16d, 16e) zum weiteren Bedienen durch zumindest ein akustisches Signal ausgewählt wird, welches der Funktionskomponente (16d, 16e) spezifisch zugeordnet wird, und eine Funktion und/oder ein Betriebszustand einer ausgewählten Funktionskomponente (16d, 16e) abhängig von Gesten eines Bedieners (2) eingestellt wird, wobei eine vorgebbare Mehrzahl unterschiedlicher Gesten für das Einstellen einer Funktionskomponente (16d, 16e) zugrunde gelegt wird und zumindest eine der Gesten bei beiden Funktionskomponenten (16d, 16e) einer jeweils komponentenspezifischen Einstellung einer Funktion und/oder einem Betriebszustand zugeordnet wird, und abhängig von einem Erfassen einer Geste durch eine Erfassungsvorrichtung (16a) eine der erfassten Geste zugeordnete Funktion und/oder ein Betriebszustand der ausgewählten Funktionskomponente (16d, 16e) eingestellt wird.

## Beschreibung

Die Erfindung betrifft ein Verfahren und eine Vorrichtung zum Betreiben von zumindest zwei Funktionskomponenten eines Systems.

Die Steuerung von verschiedensten Komponenten in Systemen erfolgt in der Regel durch Schalter, Drehsteller, Tastaturen oder beispielsweise auch Joysticks. Bekannt sind auch virtuelle Bedienelemente, die beispielsweise durch eine Interpretation von Gesten einer Hand repräsentiert sind, die für eine derartige Steuerung eingesetzt werden. Diese bekannten Bedienelemente ermöglichen sowohl die Übersetzung von translatorischen als auch von rotatorischen Bewegungen in Maschinenanweisungen. Insbesondere Joysticks weisen hierbei Vorteile gegenüber herkömmlichen Bedienelementen auf.

In modernen Fahrzeugen erfolgt die Bedienung von Fahrzeugfunktionen oder Betriebszuständen von Komponenten des Fahrzeugs durch den Fahrer zumeist mit Hilfe von haptischen Bedienelementen. Vereinzelt kommt auch eine Bedienung durch eine Spracheingabe zur Anwendung.

Darüber hinaus ist es bekannt, eine Bedienung durch eine Interpretation von Gesten vorzunehmen. So ist aus der DE 42 01 934 A1 ein Datenverarbeitungssystem bekannt, welches Gestik erkennt und Befehle zur Steuerung des Datenverarbeitungssystems übersetzt. Darüber hinaus ist aus der EP 1 408 443 A1 ebenfalls ein System bekannt, indem eine Funktionssteuerung über eine Gestikerkennung erfolgt. Die Gestikerkennung kann dabei beispielsweise verschiedene Hand- bzw. Fingerstellungen umfassen, welche mittels einer 2D- oder 3D-Kamera erfasst werden. Den jeweiligen Hand- und Fingerstellungen werden Aktionen zugeordnet. Die Interpretation kann sowohl auf statischen Gesten beruhen als auch bestimmte Bewegungsabläufe nutzen.

Bei einer reinen Gestikbedienung muss die Anzahl an unterschiedlichen Gesten aus Gründen der Eindeutigkeit gering gehalten werden. Somit ist die Anzahl der unterschiedlichen Funktionen, die auf Basis einer Gestikinterpretation ausgelöst werden können, ebenfalls sehr begrenzt. Darüber hinaus müssen Vorkehrungen getroffen werden, damit Bewegungen eines Benutzers nicht als ungewollte Gesten interpretiert werden und zu unbeabsichtigten Funktionsauslösungen führen.

Des Weiteren ist aus der DE 102 42 890 A1 ein Sensorarray bekannt, mit dessen Hilfe 3D-Gesten der Hand aufgenommen werden können. Es wird ein Systemdialog zwischen dem Fahrzeug und dem Fahrer beschrieben, bei dem das Fahrzeug über eine Sprachausgabe den Fahrer zu Aktionen auffordert und Aktionen in Form von Fahrergesten detektiert. Der Dialog findet somit lediglich derart statt, dass der Fahrer nur Gesten ausführt, welche vom System detektiert werden und lediglich das System eine Sprachausgabe durchführt.

Darüber hinaus ist aus der DE 103 08 415 D3 ein Verfahren zur Steuerung einer Sitzeinstellung eines Fahrzeugs bekannt. Mittels einer Innenraum-Kamera werden Bilder zumindest eines Teils einer auf einem Fahrzeugsitz sitzenden Person erfasst, wobei mittels einer Steuereinheit die Steuerung der Sitzeinstellung erfolgt. In der Steuereinheit werden die von der Innenraum-Kamera erfassten Bilder mit in der Steuereinheit abgespeicherten Bewegungsarten verglichen und bei Erkennung einer abgespeicherten Bewegungsart wird eine dieser Bewegungsart zugeordnete Sitzeinstellung vorgenommen. Die Steuerung der Sitzeinstellung kann durch eine Spracheingabe aktiviert werden. Mit dem bekannten Verfahren wird somit lediglich eine einzige Komponente eines Fahrzeugs gesteuert und die Komplexität einer Kombination aus Sprache und Gestik ist dabei relativ gering.

Es ist Aufgabe der vorliegenden Erfindung, ein Verfahren und eine Vorrichtung zu schaffen, bei der eine Mehrzahl an Komponenten eines Systems mittels Gestik und Akustik aufwandsarm und sicher betrieben werden können.

Diese Aufgabe wird durch ein Verfahren, welches die Merkmale nach Patentanspruch 1 aufweist, und eine Vorrichtung, welche die Merkmale nach Patentanspruch 13 aufweist, gelöst.

Bei einem lösungsgemäßen Verfahren zum Betreiben von zumindest zwei Funktionskomponenten eines Systems wird eine Auswahl einer Funktionskomponente zum weiteren Bedienen dieser Funktionskomponente durch zumindest ein akustisches Signal getroffen. Dieses akustische Signal wird vorab durch einen Zuteilungsvorgang der jeweiligen Funktionskomponente spezifisch zugeordnet. Somit wird durch Erzeugen eines spezifischen akustischen Signals eine diesem Signal zugeordnete Funktionskomponente individuell ausgewählt. Nachdem eine derartige Auswahl einer Funktionskomponente erfolgt ist, wird eine Funktion und/oder ein Betriebszustand einer ausgewählten Funktionskomponente abhängig von Gesten eines Bedieners eingestellt. Beim lösungsgemäßen Verfahren wird somit eine Kombination aus Akustik und Gestik für die Initialisierung und weitere Bedienung einer Funktionskomponente durchgeführt. Aus einer Mehrzahl an Funktionskomponenten kann dadurch in einfacher und aufwandsarmer Weise eine präzise Auswahl erfolgen und eine einfache und aufwandsarme weitere Einstellung bzw. Betätigung dieser Funktionskomponente durchgeführt werden. Darüber hinaus ist das lösungsgemäße Verfahren derart konzipiert, dass eine vorgebbare Mehrzahl unterschiedlicher Gesten für das Einstellen einer Funktionskomponente zugrunde gelegt werden und zumindest einer dieser Gesten bei beiden Funktionskomponenten einer jeweils komponentenspezifischen Einstellung einer Funktion und/oder einem Betriebszustand zugeordnet wird. Dadurch kann erreicht werden, dass die Anzahl der Gesten relativ gering gehalten werden kann und zumindest eine dieser Gesten aus dem Satz an unterschiedlichen Gesten, bevorzugt alle Gesten, für die individuelle Einstellung von Funktionen und/oder Betriebszuständen für Funktionskomponenten verwendet werden können. Dadurch ist es nicht mehr erforderlich, eine Vielzahl an unterschiedlichen Gesten bereitzustellen, welche jeweils nur für eine bestimmte Funktionskomponente und deren Einstellung verwendet werden können, sondern eine relativ geringe Anzahl an Gesten kann grundlegend für das Einstellen aller Funktionskomponenten verwendet werden. Eine solche zugrunde gelegte Geste wird dann komponentenspezifisch einer Funktion und/oder einem Betriebszustand zugeordnet, so dass ein und dieselbe Geste bei unterschiedlichen Funktionskomponenten das Einstellen verschiedener Funktionen und/oder Betriebszustände bewirkt. Des Weiteren wird dann bei dem lösungsgemäßen Verfahren abhängig von einem Erfassen und einem Erkennen einer Geste durch eine Erfassungsvorrichtung eine der erfassten Geste zugeordnete Funktion und/oder ein Betriebszustand der ausgewählten Funktionskomponente eingestellt.

Mit der bewussten Initialisierung und Auswahl einer Funktionskomponente wird somit im Vergleich zu bekannten Verfahren und Vorrichtungen eine ungewollte Interpretation von Fahrerbewegungen als Gesten, welche ein Einstellen von Funktionen dieser Komponente bewirken, verhindert. Darüber hinaus kann die Anzahl an Gesten gering gehalten werden, so dass nur ein relativ geringer Lernaufwand beim Bediener bzw. Fahrzeugnutzer erforderlich ist. Dennoch kann durch die Kombination von Akustik und Gestik ein großer Umfang an Kommandos ermöglicht werden und für eine Mehrzahl an Funktionskomponenten bereitgestellt werden. Durch eine derartige Kombination von Akustik und Gestik kann eine umfangreiche Baumstruktur von Bedienkommandos erzeugt werden. Die einzelnen Äste einer derartigen Baumstruktur werden durch Initialisierung mit geeigneten akustischen Schlüsselkommandos zugänglich. Jedem dieser Äste ist dann ein Satz an Gesten, welche statisch oder dynamisch sein können, zugeordnet. Der zugrunde gelegte Satz an Gesten wird in sämtlichen Ästen der Baumstruktur verwendet. Die Gesten haben somit abhängig vom vorhergehenden akustischen Schlüsselsignal unterschiedliche Bedeutungen. Die Menü- bzw. Baumstruktur der Gestikbedienung erlaubt eine übersichtliche intuitive Gestaltung der Bedienoberfläche. Bei einer gestengesteuerten Fahrzeugbedienung entfällt das Tasten nach haptischen Bedienelementen, deren Position vor allem bei beispielsweise Nachtfahrten zum Teil schwer zu finden ist. Gesten können in einem weiten Erfassungsbereich der Erfassungsvorrichtung ausgeführt werden und können bevorzugt unabhängig vom Ausführungsort interpretiert werden. Zudem kann der Fahrer damit Bedienfunktionen ohne Blickabwendung von der Fahrbahn auslösen, wodurch die Fahrsicherheit wesentlich erhöht wird. Darüber hinaus ist Gestik intuitiv und bietet die Möglichkeit, einfach und schnell neue Bedienkonzepte zu lernen.

Als akustisches Signal, welches zur Auswahl einer Funktionskomponente erzeugt wird, kann bevorzugt ein Sprachsignal erzeugt werden. Dadurch kann eine sehr einfache und doch präzise Auswahl ermöglicht werden, da spezifische Worte zugrunde gelegt werden können, welche die jeweilige Funktionskomponente eindeutig charakterisieren. Beispielsweise kann vorgesehen sein, dass ein Schlüsselwort "Audio" vorgesehen wird, wenn eine als Audioanlage ausgebildete Funktionskomponente ausgewählt werden soll. Ebenso kann beispielsweise als Schlüsselwort "Klima" oder "Klimaanlage" vorgesehen werden und einer als Klimatisierungsvorrichtung vorgesehenen Funktionskomponente zugeordnet werden. Eine derartige eindeutige Zuordnung von Schlüsselwörtern ermöglicht auch ein sehr einfaches Auswählen derartiger Funktionskomponenten, da der Benutzer bzw. Bediener lediglich die vorgesehene Komponente mit der dafür üblichen Bezeichnung aussprechen muss. Das Merken von schwierigen oder abwägigen Codewörtern ist daher nicht erforderlich.

Als akustisches Signal kann jedoch auch lediglich ein einfaches Audiosignal erzeugt werden. Als Audiosignal kann beispielsweise ein Ton mit einer bestimmten Frequenz oder aber auch eine Sequenz von mehreren Tönen erzeugt werden, wobei ein derartiges Audiosignal vorab spezifisch einer Funktionskomponente zugeordnet wird. Diese Ausgestaltung ist besonders dann vorteilhaft, wenn ein Fahrzeugnutzer sprachlich behindert oder eingeschränkt ist und eine Initialisierung und Auswahl einer Funktionskomponente durch ein eindeutiges Sprachsignal nur eingeschränkt oder nicht möglich ist. Dieses akustische Signal kann beispielsweise auch ein durch den Bediener erzeugter Pfeifton sein oder in sonstiger Weise erzeugt werden.

Vorzugsweise werden die unterschiedlichen Gesten vorab als fester vorgegebener Satz vorgegeben und jede Geste wird komponentenspezifisch einer Funktion und/oder einem Betriebszustand zugeordnet. Bei dieser Ausführung wird somit eine feste und unveränderliche Anzahl an Gesten vorgegeben, welche auch bereits bestimmten Funktionen und/oder Betriebszuständen genau zugeordnet werden, wobei von einem Nutzer diese genauen Gesten gelernt werden müssen und die Zuordnung zu Funktionen und/oder Betriebszuständen dem Nutzer bekannt sein muss.

Durch einen derartig festen unveränderlichen Satz an Gesten kann somit eine Einheitlichkeit bei der Auswahl und Einstellung der Funktionskomponenten erreicht werden, so dass auch eine Bedienung der Funktionskomponenten unabhängig von einem Bediener bzw. Nutzer stets gleich erfolgen kann. Die Funktionskomponenten des Systems können somit von verschiedensten Bedienern in gleicher Art und Weise betrieben werden.

Es kann auch vorgesehen sein, dass zumindest eine Geste durch einen Bediener individuell vorgegeben wird und individuell durch den Bediener einer Funktion und/oder einem Betriebszustand einer Funktionskomponente zugeordnet wird. Durch diese Ausgestaltung kann erreicht werden, dass ein Bediener sich individuell einen Satz an für ihn bevorzugten und gewünschten Gesten zugrundelegen kann und diese von ihm bevorzugten Gesten einzeln dann auch einer Funktion und/oder einem Betriebszustand einer Funktionskomponente gemäß dem Wunsch des Bedieners zugeordnet werden. Durch diese Ausgestaltung kann eine Individualisierung ermöglicht werden und bevorzugten Gestiken eines Bedieners Rechnung getragen werden.

Bevorzugt ist bei einer derartigen Ausgestaltung vorgesehen, dass prinzipiell zu Beginn des Betreibens der Funktionskomponenten überprüft wird, welcher Bediener gegenwärtig ist und welcher Satz an individuellen Gesten und Zuordnungen dieser Gesten zu Funktionen oder Betriebszuständen der Funktionskomponenten zugrunde gelegt und abgespeichert ist. Durch diese Ausgestaltung kann dann wiederum erreicht werden, dass verschiedenste Bediener, welche verschiedenste individuelle Sätze an Gesten und Zuordnungen zu Funktionen und/oder Betriebszuständen konzipiert haben, ein Betreiben dieser Funktionskomponenten durchführen können. Bei Fahrzeugen können beispielsweise verschiedene Nutzer dann individuelle Gestiksätze programmieren. Um dann jedoch den jeweils gegenwärtigen Nutzer zu Erkennen und auch dessen individuell zusammengestellten Gestiksatz entsprechend einer gewünschten Einstellung zugrunde zu legen, ist bevorzugt eine Nutzererkennung vorzusehen. Diese kann in einer einfachen Bilderfassung, beispielsweise des Kopfes des Nutzers, vorteilhafter Weise bereits beim Einsteigen in das Fahrzeug oder Starten des Fahrzeugs, durchgeführt werden. Um Verwechslungen vermeiden zu können, kann zusätzlich oder anstatt einer einfachen Bilderfassung eine Identifizierung über Biometrik erfolgen. Beispielsweise kann vorgesehen sein, dass ein Nutzer anhand seines Fingerabdrucks oder seiner Augeniris eindeutig erkannt wird und dann die von diesem Nutzer zugrunde gelegten Gesten verwendet und im Hinblick auf Einstellungen richtig interpretiert werden

Bevorzugt wird bei einer derartigen individuellen Zusammenstellung von Gesten und Zuordnungen der einzelnen Gesten zu bestimmten Funktionen und/oder Betriebszuständen der Funktionskomponenten zunächst eine von einem Bediener zugrundegelegte Geste durch diesen ausgeführt und von der Erfassungsvorrichtung erfasst und abgespeichert. Zumindest die Erfassungsvorrichtung kann dazu in einem Lernmodus betrieben werden, welcher von dem Nutzer vorher beispielsweise akustisch und/oder manuell aktiviert werden kann. Ist die individuelle Geste im Lernmodus erfasst, kann im Nachfolgenden der Bediener dieser individuellen Geste verschiedene Funktionen und/oder Betriebszuständen verschiedener Funktionskomponenten zuordnen. Die flexible und vielfältige Ausgestaltung und Konzipierung kann dadurch gewährleistet werden.

Bevorzugt wird eine einer erfassten und erkannten Geste zugeordnete Einstellung einer Funktion und/oder eines Betriebszustands einer ausgewählten Funktionskomponente vor dem Ausführen der Einstellung akustisch und/oder visuell durch das System bestätigt. Durch diese Redundanz kann dem Sicherheitsaspekt Rechnung getragen werden, da sich das System vor dem endgültigen Ausführen einer Einstellung nochmals über die Richtigkeit rückversichert.

Das Einstellen der Funktion und/oder des Betriebszustands der ausgewählten Funktionskomponente wird bevorzugt erst dann ausgeführt, wenn eine akustische und/oder eine visuelle Bestätigung des Systems vom Bediener akustisch und/oder durch eine Geste nochmals bestätigt wird.

Vorzugsweise wird die Art der Einstellung einer Funktion und/oder eines Betriebszustands einer ausgewählten Funktionskomponente abhängig von der zeitlichen Dauer und/oder örtlichen Durchführung der zugeordneten Geste ausgeführt. Dadurch kann die vielfältige Einstellungsmöglichkeit und Flexibilität nochmals erhöht werden und es können auch verschiedenste und auch schwierige Einstellungen durchgeführt werden. Durch die zeitliche Dauer und/oder die örtliche Durchführung der zugeordneten Geste kann somit eine Einstellung beispielsweise schnell oder langsam oder beispielsweise auch wertmäßig hoch oder niedrig erfolgen. Beispielsweise kann hier vorgesehen sein, dass die Einstellung einer Lautstärke einer Audioanlage abhängig von der zeitlichen Dauer einer durchgeführten und für das Einstellen dieser Lautstärke zugeordneten Geste erfolgt.

Die Erfassungsvorrichtung ist bevorzugt als Detektor zur dreidimensionalen Objekterfassung, insbesondere als Kamera, ausgebildet. Die Funktionskomponenten sind bevorzugt als Komfort- und/oder Sicherheits- und/oder Informations- und/oder Entertainmenteinheiten ausgebildet. Das System ist bevorzugt als Fahrzeug ausgebildet. Prinzipiell ist das Verfahren bei allen Systemen anwendbar, welche eine Mehrzahl an Funktionskomponenten aufweisen, die unterschiedliche Funktionen und/oder Betriebszustände umfassen können. Die Fahrzeuge können als Land-, Luft- oder Seefahrzeuge ausgebildet sein. Es kann jedoch auch vorgesehen sein, dass dieses lösungsgemäße Verfahren auch in der Gebäudeleittechnik oder Haustechnik realisiert wird. Bevorzugt wird es jedoch dort eingesetzt, wo die Aufmerksamkeit und Konzentration eines Bedieners im Allgemeinen und vorrangig auf andere Vorgänge, als diejenigen des Einstellens der Funktionskomponenten gerichtet ist, oder zu richten ist.

Als Funktionskomponenten können neben den bereits genannten Audioanlagen und Klimaanlagen, insbesondere in einem Fahrzeug auch noch ein Navigationssystem oder sonstige bild- und/oder tondarstellende Systeme durch das vorgeschlagene Verfahren betrieben werden. Ebenso ist es jedoch möglich, eine Innenraumbeleuchtung oder Richtungsblinker oder Scheinwerfer, insbesondere den Wechsel zwischen Abblendlicht und Fernlicht, mit dem vorgeschlagenen Verfahren zu betreiben. Diese Aufzählung ist lediglich beispielhaft und nicht einschränkend zu verstehen. Auch hier sei erwähnt, dass prinzipiell alle elektronischen Funktionskomponenten in einem Fahrzeug entsprechend bedient werden können.

Eine Vorrichtung zum Betreiben von zumindest zwei Funktionskomponenten eines System umfasst neben den Funktionskomponenten auch eine Erfassungsvorrichtung, wobei eine der Funktionskomponenten zum weiteren Bedienen durch zumindest ein akustisches Signal auswählbar ist, wobei das akustische Signal der Funktionskomponente spezifisch zugeordnet ist. Eine Funktion und/oder ein Betriebszustand einer ausgewählten Funktionskomponente ist abhängig von Gesten eines Bedieners einstellbar. Eine vorgebbare Mehrzahl unterschiedlicher Gesten ist für das Einstellen einer Funktionskomponente zugrundegelegt und zumindest eine der Gesten ist bei beiden Funktionskomponenten einer jeweils komponentenspezifischen Einstellung einer Funktion und/oder einem Betriebszustand zugeordnet. Abhängig von einem Erfassen und einem Erkennen einer Geste durch eine Erfassungsvorrichtung ist eine der erfassten Geste zugeordnete Funktion und/oder ein Betriebszustand der ausgewählten Funktionskomponente einstellbar. Die Vorrichtung ermöglicht in einfacher und exakter Weise das Betreiben einer Mehrzahl von unterschiedlichen Funktionskomponenten und ist insbesondere in einem Fahrzeug ausgebildet.

Vorteilhafte Ausgestaltungen des Verfahrens sind als vorteilhafte Ausführungen der Vorrichtung anzusehen, welche entsprechende Mittel zum Ausführen dieser Schritte aufweist.

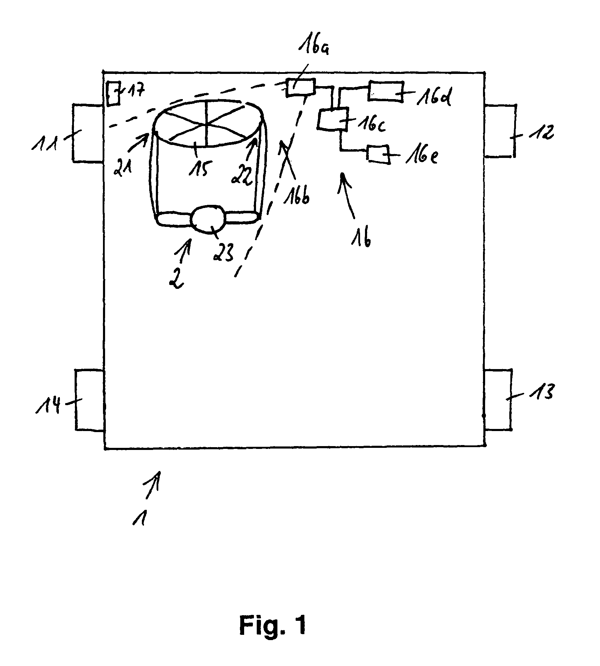

Ausführungsbeispiele der Erfindung werden nachfolgend anhand einer schematischen Zeichnung näher erläutert. Die einzige Fig. 1 zeigt eine schematische Darstellung eines Kraftfahrzeugs in einer Draufsichtdarstellung, in der ein Ausführungsbeispiel einer verbindungsgemäßen Vorrichtung angeordnet ist.

Das Kraftfahrzeug 1 weist hier Räder 11, 12, 13 und 14 auf. Darüber hinaus umfasst das Kraftfahrzeug 1 ein Lenkrad 15 und eine Vorrichtung 16 zum Betreiben von zumindest zwei Funktionskomponenten des Kraftfahrzeugs 1. Die Vorrichtung 16 umfasst eine optische Erfassungsvorrichtung 16a, welche im Ausführungsbeispiel als Detektor zur dreidimensionalen Objekterfassung ausgebildet ist. Die optische Erfassungsvorrichtung 16a kann als Stereokamera oder als Kamerasystem, welches nach dem Laufzeitverfahren (Time-Off-Flight) funktioniert, ausgebildet sein. Im Falle einer Stereokamera ist sicherzustellen, dass die Detektionssicherheit bei der Objekterfassung, insbesondere auch bei Nacht, gegeben ist. Falls die Signalempfindlichkeit der Kamera hierfür nicht ausreichen sollte, ist eine zusätzliche Infrarotbeleuchtung des Fahrzeuginnenraums erforderlich. Die Erfassungsvorrichtung 16a ist mit ihrem Erfassungsbereich 16b derart orientiert, dass das Lenkrad 15 und ein Fahrer 2 des Kraftfahrzeugs 1 beobachtet werden können. Insbesondere ist der Erfassungsbereich 16b derart ausgerichtet, dass Hände 21 und 22 sowie ein Kopf 23 des Fahrers 2 erfassbar sind. Die Erfassungsvorrichtung 16a kann zur Detektion von für den Menschen sichtbarem oder unsichtbarem Licht ausgebildet sein. Insbesondere wird dadurch auch der infrarote Wellenlängenbereich umfasst.

Darüber hinaus umfasst die Vorrichtung 16 eine Steuereinheit 16c, welche mit der optischen Erfassungsvorrichtung zum Datenaustausch drahtlos oder aber auch drahtgebunden verbunden sein kann. Des Weiteren weist die Vorrichtung 16 zwei Funktionskomponenten auf, welche im Ausführungsbeispiel als Audioanlage 16d und als Klimaanlage 16e ausgebildet sind. Auch die Audioanlage 16d und die Klimaanlage 16e sind mit der Steuereinheit 16c zum Signalaustausch verbunden. Sowohl die Anzahl als auch die spezifische Ausgestaltung der Funktionskomponenten in Form der Audioanlage 16d und der Klimaanlage 16e ist lediglich beispielhaft gewählt und zur näheren Erläuterung der Erfindung konkretisiert.

Im Ausführungsbeispiel ist in der Steuereinheit 16c ein vorab fest vorgegebener und unveränderlicher Satz unterschiedlicher Gesten abgelegt. Im Ausführungsbeispiel ist eine erste Geste dadurch spezifiziert, dass sie ein Hin- und Herdrehen des Kopfes 23 darstellt. Eine weitere Geste ist dadurch konkretisiert, dass sie ein Nicken des Kopfes 23 spezifiziert. Des Weiteren sind als fest vorgegebene Gesten neben diesen vorab genannten dynamischen Gesten auch statische Gesten abgelegt. Diesbezüglich ist als statische Geste ein nach oben orientierter Daumen der rechten Hand 22 abgelegt. Als weitere statische Geste ist ein waagrecht gerichteter Daumen der rechten Hand 22 abgelegt. In entsprechender Weise sind zwei weitere statische Gesten des Daumens der linken Hand 21 analog zu den Daumenstellungen der rechten Hand 22 abgespeichert. Darüber hinaus sind weitere dynamische Gesten abgespeichert, von denen eine eine Bewegung des Daumens der rechten Hand 22 von einer waagrecht orientierten Stellung in eine vertikal orientierte Stellung charakterisiert. Entsprechend ist eine weitere dynamische Geste dahingehend abgelegt, dass sie eine Bewegung dieses Daumens der rechten Hand 22 von einer vertikalen Stellung in eine horizontale Stellung charakterisiert. In analoger Weise sind auch derartige dynamische Gesten des Daumens der linken Hand 21 abgelegt. Durch diesen Basissatz an Gesten können viele Kombinationen im Hinblick auf eine Einstellung von Funktionen und/oder Betriebszustände der Audioanlage 16d und 16e realisiert werden. Darüber hinaus sind die genannten beispielhaften Gesten sehr einfach auszuführen und ermöglichen dennoch stets den sicheren Betrieb des Kraftfahrzeugs 1 und die ununterbrochene Beobachtung der Verkehrssituation durch den Fahrer 2.

Jede dieser unterschiedlichen und fest vorgegebenen Gesten ist einer spezifischen Funktion und/oder einem spezifischen Betriebszustand der Audioanlage 16d und der Klimaanlage 16e zugeordnet. Im Ausführungsbeispiel ist vorgesehen, dass der Geste des statischen nach oben bzw. vertikal orientierten Daumens der rechten Hand 22 die Funktion des CD-Spielers der Audioanlage 16d einerseits und die Funktion einer ausschließlichen Luftzuführung an eine nicht dargestellte Frontscheibe des Kraftfahrzeugs 1 der Klimaanlage 16e andererseits zugeordnet ist. Der Geste des waagrecht orientierten Daumens der rechten Hand 22 ist die Funktion Radio der Audioanlage 16d einerseits und die Luftzuführung der Klimaanlage 16e an die Frontscheibe des Kraftfahrzeugs 1 sowie in dem Beinbereich zumindest des Fahrers 2 andererseits zugeordnet. Der statischen Geste des nach oben orientierten Daumens der linken Hand 21 ist die Funktion "nächstes Lied" des CD-Spielers der Audioanlage 16d einerseits und die Luftzuführung in den Beinbereich des Fahrers 2 der Klimaanlage 16e andererseits zugeordnet. Des Weiteren ist der statischen Geste des horizontal orientierten Daumens der linken Hand 21 ein Wechsel des Senders des Radios der Audioanlage 16d einerseits und eine Luftzuführung an den gesamten Innenraum des Kraftfahrzeugs 1 der Klimaanlage 16e andererseits zugeordnet.

Der dynamischen Geste, welche eine Bewegung des Daumens der rechten Hand 22 von der vertikalen Stellung in die waagrechte Stellung betrifft, ist einerseits eine Reduzierung der Lautstärke der Audioanlage 16d und andererseits ein Abkühlen bzw. eine Temperaturreduzierung des Luftstroms, welcher von der Klimaanlage 16e erzeugt wird, zugeordnet.

Der dynamischen Geste des Daumens der rechten Hand 22, welche eine Bewegung von der horizontalen Stellung in die vertikale Stellung ist, ist einerseits die Erhöhung der Lautstärke der Audioanlage 16d und andererseits ein Erwärmen des Luftstroms, welcher von der Klimaanlage 16e erzeugt wird, zugeordnet.

Darüber hinaus ist der dynamischen Geste des Daumens der linken Hand 21, welche eine Bewegung von der vertikalen Stellung in die horizontale Stellung darstellt, lediglich bei der Klimaanlage 16e eine Funktion zugewiesen und zwar dahingehend, dass der erzeugte Luftstrom der Klimaanlage 16e reduziert wird. In entsprechender Weise ist der dynamischen Geste des Daumens der linken Hand 21, welche eine Bewegung von der horizontalen Stellung in die vertikale Stellung darstellt, lediglich bei der Klimaanlage 16e eine Funktion zugewiesen und zwar dahingehend, dass der von der Klimaanlage 16e erzeugte Luftstrom verstärkt wird.

Darüber hinaus sind die beiden dynamischen Gesten der Kopfbewegung einerseits als Bestätigung (Kopf 23 nicken) und andererseits als ein Ablehnen (Kopf 23 hin und her schwenken) zugeordnet. Einer Mehrzahl der genannten statischen und dynamischen Gesten ist somit komponentenspezifisch eine individuelle Funktion zugeordnet. Mit ein und derselben Geste kann somit abhängig von der ausgewählten Funktionskomponente eine spezifische Einstellung der Funktion und/oder des Betriebszustands dieser ausgewählten Funktionskomponente erreicht werden. Durch einen relativ begrenzten Satz an Gesten, welche darüber hinaus sehr einfach auszuführen und für einen Fahrzeugnutzer sehr einfach zu erlernen und zu merken ist, kann eine Vielzahl an Funktionskomponenten sicher und aufwandsarm betrieben werden.

Im Nachfolgenden wird auf das erfindungsgemäße Verfahren anhand des in Fig. 1 zugrunde gelegten Ausführungsbeispiels näher eingegangen. Möchte der Fahrer 2 beispielsweise eine in der Audioanlage 16d enthaltene CD (Compact Disc) abspielen, so muss er die Audioanlage 16d als Funktionskomponente zunächst durch Erzeugung eines akustischen Signals auswählen. Im Ausführungsbeispiel ist dabei vorgesehen, dass durch ein individuelles zugeordnetes Sprachsignal "Audio" eine derartige Auswahl durchgeführt wird. Das Sprachsignal des Fahrers 2 wird dabei beispielsweise durch eine Freisprechanlage 17 erfasst. Die Freisprechanlage 17 ist dabei vorteilhafterweise in Sprechrichtung vor dem Fahrer 2 im Kraftfahrzeug 1 angeordnet. Eine Anordnung kann dabei im oder am Fahrzeughimmel (nicht dargestellt) oder im Bereich einer A-Säule (nicht dargestellt) vorgesehen sein. Im Hinblick auf die Anordnung ist die optische Erfassungsvorrichtung 16a ebenfalls bevorzugt in Blickrichtung des Fahrers 2 vor diesem angeordnet und beispielsweise in einem Innenraumspiegel oder einem Fahrzeughimmel oder auf einer Frontkonsole, beispielsweise im Bereich des Armaturenbretts, angeordnet. Diese möglichen Anordnungen sind jedoch lediglich beispielhaft und können im Hinblick auf zugrunde gelegte Gesten und deren optimale Erfassung positioniert werden. Auch mehrere Freisprechanlagen 17 und/oder mehrere optische Erfassungsvorrichtungen 16a können vorgesehen sein. Eine Anordnung der Einheiten 16a und/oder 17 kann auch beispielsweise in einer Kopfstütze eines Fahrzeugsitzes oder in einer B-Säule vorgesehen sein.

Ist nun die Audioanlage 16d über das Sprachsignal "Audio" ausgewählt, so ist im Ausführungsbeispiel vorgesehen, dass eine akustische und/oder visuelle Bestätigung des detektierten Sprachsignals durch die Vorrichtung 16 ausgegeben wird. Es kann dabei vorgesehen sein, dass die Vorrichtung 16 in akustischer Weise nachfrägt: "Wollen Sie die Audioanlage auswählen?". Zur Bestätigung ist es vorgesehen, dass der Fahrer 2 bei tatsächlich erwünschtem Auswählen dieser Audioanlage 16d ein Nicken des Kopfes 23 in Form einer Ja-Bestätigung durchführt. Im Ausführungsbeispiel kann dabei vorgesehen sein, dass diese Bestätigung des Fahrers 2 innerhalb einer vorgebbaren Zeitdauer, beispielsweise fünf Sekunden, erfolgen muss. Diese Gestik des Fahrers 2 kann dann durch die optische Erfassungsvorrichtung 16a erfasst werden und das detektierte Bild an die Steuereinheit 16c zur Auswertung übertragen werden. In dieser Steuereinheit 16c wird durch einen Vergleich des detektierten Bildes mit einem abgelegten Bild die Bestätigung des Fahrers 2 erkannt und eine Auswahl der Audioanlage 16d vorgenommen werden. Erfolgt innerhalb dieser vorgebbaren Zeitdauer keine Bestätigung des Fahrers 2 oder erfolgt eine Ablehnung durch ein Hin- und Herbewegen des Kopfes 23 gemäß einer symbolisierten Nein-Bestätigung, so wird die Audioanlage 16d zur weiteren Bedienung nicht ausgewählt.

Ebenso kann jedoch auch vorgesehen sein, dass diese Rückbestätigung des Fahrers 2 auf die akustische und/oder visuelle Anfrage der Vorrichtung 16 durch ein akustisches Signal bestätigt oder abgelehnt wird. Ausgehend von der Situation, dass der Fahrer 2 die Bestätigungsanfrage der Vorrichtung 16 mit einer entsprechenden Ja-Geste positiv bestätigt hat, ist die Audioanlage 16d ausgewählt und zur weiteren Bedienung durch die oben erläuterten und beispielhaft zugrunde gelegten Daumen-Gesten freigegeben.

Um nun den gewünschten CD-Spieler der Audioanlage 16d zu aktivieren und eine entsprechende CD abzuspielen, muss im gewählten Ausführungsbeispiel der Fahrer 2 den Daumen der rechten Hand 22 vertikal nach oben strecken. Auch hierbei kann vorgesehen sein, dass für eine vorgebbare Zeitdauer nach dem positiv bestätigten Auswählen der Audioanlage 16d eine entsprechende Geste des Fahrers 2 durchgeführt werden muss, um ein weiteres Einstellen und Auswählen von Funktionen und/oder Betriebszuständen der ausgewählten Funktionskomponente, hier der Audioanlage 16d, ermöglichen zu können. Ist diese vorgebbare Zeitdauer, welche wiederum beispielsweise etwa 10 Sekunden betragen kann, verstrichen, wird der ausgewählte Zustand der Audioanlage 16d zurückgenommen und diese befindet sich dann wiederum im nicht ausgewählten Zustand.

Erfolgt diese Geste des Fahrers 2 in Form des statisch nach oben gestreckten Daumens der rechten Hand 22 und wird diese von der optischen Erfassungsvorrichtung 16a erfasst und in der Steuereinheit 16c erkannt, so wird der CD-Spieler zum Abspielen der CD aktiviert. Ist die eingestellte Lautstärke nicht dem Wunsch des Fahrers 2 entsprechend, so kann diese geändert werden. Möchte der Fahrer 2 beispielsweise ein gerade abzuspielendes Lied lauter hören, so muss er eine dynamische Geste mit dem Daumen der rechten Hand 22 dahingehend durchführen, dass dieser von der horizontalen Orientierung in die vertikale Orientierung bewegt wird. Es kann dabei vorgesehen sein, dass abhängig von der Geschwindigkeit dieser Bewegung die Lautstärke auch entsprechend schneller erhöht wird.

Auch hier kann vorgesehen sein, dass diese dynamische Bewegung im Hinblick auf ein Lauterstellen innerhalb einer vorgebbaren Zeitdauer nach der statischen Bewegung betreffend die Aktivierung des CD-Spielers durchzuführen ist. Um nicht ein ständiges Hin und Her zwischen Auswählen der Audioanlage 16d durch das entsprechende Sprachsignal und einer nachfolgenden Gestik im Hinblick auf eine individuelle Auswahl einer Einstellung dieser Audioanlage 16d durchführen zu müssen, kann vorgesehen sein, dass die vorgebbaren Zeitdauern, innerhalb der bei einer ausgewählten Funktionskomponente eine weitere Geste durchzuführen ist, relativ lang bemessen sind. So kann beispielsweise vorgesehen sein, dass die Zeitdauer zwischen zwei Gesten beispielsweise 20 Sekunden oder aber auch länger sein kann.

Möchte der Fahrer 2 auf das nächste Lied der CD wechseln, so kann er dies durch die statische Geste des nach oben gestreckten Daumens der linken Hand 21 bewirken. Abhängig von der Zeitdauer dieser statischen Geste kann auch auf ein übernächstes oder noch nachrangigeres Lied der CD gewechselt werden.

Möchte der Fahrer 2 nun im Weiteren beispielsweise auch den gesamten Innenraum des Kraftfahrzeugs 1 klimatisieren, so kann er die Klimaanlage 16e durch ein Sprachsignal "Klimaanlage" auswählen, wenn dieses Wort "Klimaanlage" von der Freisprechanlage 17 erfasst und erkannt wird. Die Freisprechanlage 17 kann direkt mit der Steuereinheit 16c verbunden sein oder über einen Kommunikationsbus des Kraftfahrzeugs 1 verbunden sein.

Ist die Klimaanlage 16e initialisiert bzw. ausgewählt, so kann wiederum über die oben angesprochenen Gesten eine entsprechende Einstellung von Funktionen und/oder Betriebszuständen der Klimaanlage 16e erreicht werden. Im gewählten Beispiel kann der Fahrer 2 durch die statische Geste eines horizontal orientierten Daumens der linken Hand 21 erreichen, dass eine Klimatisierung des gesamten Innenraums des Kraftfahrzeugs 1 durchgeführt wird. Möchte er den dabei erzeugten Luftstrom wärmer haben, so kann er dies durch die dynamische Geste des Daumens der rechten Hand 22, welcher von der horizontalen Orientierung in die vertikale Orientierung geführt wird, bewirken. Diese hier erläuterten beispielhaften Einstellungen können noch in vielfältiger Weise ergänzt und abgeändert werden. Es soll dadurch lediglich beispielhaft die Einfachheit und Sicherheit des Verfahrens und der Vorrichtung verdeutlicht werden. Besonders bei absoluten Einstellungen von Funktionen und/oder Betriebszuständen von Komponenten, welche über Sprachsignale nicht oder nur sehr schwer zu erreichen sind, wie beispielsweise das Einstellen einer gewünschten Lautstärke oder eines gewünschten Luftstroms, kann dies durch die Gestik und insbesondere durch die Art im Hinblick auf zeitliche und/oder örtliche Durchführung der statischen oder dynamischen Geste einfach und doch sehr präzise ermöglicht werden. Es kann auch vorgesehen sein, dass ein Einstellen einer Funktion und/oder eines Betriebszustands so lange durchgeführt wird, wie eine zugeordnete Geste durch den Fahrer 2 ausgeführt wird. Es kann auch vorgesehen sein, dass ein und dieselbe Geste bei einer Ausführung an örtlich unterschiedlichen Zonen des Erfassungsbereichs 16b jeweils für eine Einstellung unterschiedlicher Funktionen und/oder Betriebszustände einer Funktionskomponente vorgesehen ist. Bevorzugt ist die örtliche Ausführung einer Geste nicht zu berücksichtigen, so dass das Ausführen einer Geste irgendwo innerhalb des Erfassungsbereichs 16d stets die gleiche komponentenspezifisch zugeordnete Wirkung erzeugt.

Wie bereits erwähnt kann das Verfahren auch bei vielen anderen Funktionskomponenten eingesetzt werden und ist durch die in Fig. 1 gezeigte spezielle Auswahl nicht beschränkt. Eine Interpretation der Sprachsignale kann beispielsweise auch in einem MMI (Mensch-Maschine-Interface) erfolgen oder in ein separates Steuergerät ausgelagert werden. Zur Verarbeitung der Sprach- und Gestikbilddaten kann neben der in Fig. 1 gezeigten Ausgestaltung mit einem einzigen gemeinsamen Steuergerät auch eine Mehrzahl an Steuergeräten verwendet werden. Als Rückkopplung für den Fahrer 2 kann die Visualisierung der interpretierten Kommandos an einem Display erfolgen, welches im Bereich einer Konsole oder dem Armaturenbrett oder aber auch an eine Innenseite der Frontscheibe projiziert ist. Hierzu kann beispielsweise vorgesehen sein, dass Menüfelder angezeigt werden, die von den interpretierten Sprach- und Gestikkommandos betätigt wurden.

## Patentansprüche

1. Verfahren zum Betreiben von zumindest zwei Funktionskomponenten (16d, 16e) eines Systems (1),
- bei dem eine der Funktionskomponenten (16d, 16e) zum weiteren Bedienen durch zumindest ein akustisches Signal ausgewählt wird, welches der Funktionskomponente (16d, 16e) spezifisch zugeordnet wird,
- und eine Funktion und/oder ein Betriebszustand einer ausgewählten Funktionskomponente (16d, 16e) abhängig von Gesten eines Bedieners (2) eingestellt wird, wobei eine vorgebbare Mehrzahl unterschiedlicher Gesten für das Einstellen einer Funktionskomponente (16d, 16e) zugrunde gelegt wird und zumindest eine der Gesten bei beiden Funktionskomponenten (16d, 16e) einer jeweils komponentenspezifischen Einstellung einer Funktion und/oder einem Betriebszustand zugeordnet wird, und
- abhängig von einem Erfassen einer Geste durch eine Erfassungsvorrichtung (16a) eine der erfassten Geste zugeordnete Funktion und/oder ein Betriebszustand der ausgewählten Funktionskomponente (16d, 16e) eingestellt wird.

2. Verfahren nach Anspruch 1,
**dadurch gekennzeichnet, dass**
als akustisches Signal ein Sprachsignal erzeugt wird.

3. Verfahren nach Anspruch 1,
**dadurch gekennzeichnet, dass**
als akustisches Signal ein Audiosignal erzeugt wird.

4. Verfahren nach einem der vorhergehenden Ansprüche
**dadurch gekennzeichnet, dass**
die unterschiedlichen Gesten vorab als fester Satz vorgegeben werden und zumindest eine Geste komponentenspezifisch einer Funktion und/oder einem Betriebszustand der ersten Funktionskomponenten (16d, 16e) und einer Funktion und/oder einem Betriebszustand einer zweiten Funktionskomponente (16d, 16e) zugeordnet wird.

5. Verfahren nach einem der vorhergehenden Ansprüche,
**dadurch gekennzeichnet, dass**
zumindest eine Geste durch einen Bediener (2) individuell vorgegeben wird und individuell durch den Bediener (2) einer Funktion und/oder einem Betriebszustand einer Funktionskomponente (16d, 16e) zugeordnet wird.

6. Verfahren nach Anspruch 5,
**dadurch gekennzeichnet, dass**
eine von einem Bediener (2) zugrunde gelegte Geste durch diesen ausgeführt und von der Erfassungsvorrichtung (16a) zur weiteren Zugrundelegung erfasst und abgespeichert wird.

7. Verfahren nach einem der vorhergehenden Ansprüche,
**dadurch gekennzeichnet, dass**
eine einer erfassten Geste zugeordnete Einstellung einer Funktion und/oder eines Betriebszustands einer Funktionskomponente (16d, 16e) vor dem Ausführen der Einstellung akustisch und/oder visuell durch eine Einrichtung, insbesondere eine MMI-Einrichtung, bestätigt wird.

8. Verfahren nach Anspruch 7,
**dadurch gekennzeichnet, dass**
das Einstellen der Funktion und/oder des Betriebszustands der Funktionskomponente (16d, 16e) erst dann ausgeführt wird, wenn eine akustische und/oder eine visuelle Bestätigung der Einrichtung vom Bediener (2) akustisch und/oder durch eine Geste bestätigt wird.

9. Verfahren nach einem der vorhergehenden Ansprüche,
**dadurch gekennzeichnet, dass**
die Art der Einstellung einer Funktion und/oder eines Betriebszustands abhängig von der zeitlichen Dauer und/oder örtlichen Durchführung der zugeordneten Geste ausgeführt wird.

10. Verfahren nach einem der vorhergehenden Ansprüche,
**dadurch gekennzeichnet, dass**
die Erfassungsvorrichtung (16a) als Detektor zur dreidimensionalen Objekterfassung, insbesondere als Kamera, ausgebildet ist.

11. Verfahren nach einem der vorhergehenden Ansprüche,
**dadurch gekennzeichnet, dass**
die Funktionskomponenten (16d, 16e) als Komfort- und/oder Sicherheits- und/oder Informations- und/oder Entertainmenteinheiten ausgebildet sind.

12. Verfahren nach einem der vorhergehenden Ansprüche,
**dadurch gekennzeichnet, dass**
das System ein Fahrzeug (1) ist.

13. Vorrichtung zum Betreiben von zumindest zwei Funktionskomponenten (16d, 16e) eines Systems (1),
- bei dem eine der Funktionskomponenten (16d, 16e) zum weiteren Bedienen durch zumindest ein akustisches Signal auswählbar ist, welches der Funktionskomponente (16d, 16e) spezifisch zugeordnet ist,
- und eine Funktion und/oder ein Betriebszustand einer ausgewählten Funktionskomponente (16d, 16e) abhängig von Gesten eines Bedieners (2) einstellbar ist, wobei eine vorgebbare Mehrzahl unterschiedlicher Gesten für das Einstellen einer Funktionskomponente (16d, 16e) zugrunde gelegt ist und zumindest eine der Gesten bei beiden Funktionskomponenten (16d, 16e) einer jeweils komponentenspezifischen Einstellung einer Funktion und/oder einem Betriebszustand zugeordnet ist, und
- abhängig von einem Erfassen einer Geste durch eine Erfassungsvorrichtung (16a) eine der erfassten Geste zugeordnete Funktion und/oder ein Betriebszustand der ausgewählten Funktionskomponente (16d, 16e) einstellbar ist.
